# EUROPÄISCHE PATENTSCHRIFT

(11) **EP 2 941 356 B1**
(45) Veröffentlichungstag und Bekanntmachung des Hinweises auf die Patenterteilung: **19.04.2017**
(21) Anmeldenummer: 12816434.0
(22) Anmeldetag: 10.12.2012
(51) Int. Cl.: B42D 25/00, B42D 25/485

(54) **SICHERHEITSDOKUMENT MIT SICHERHEITSMERKMAL**
SECURITY DOCUMENT WITH SECURITY FEATURE
DOCUMENT DE SÉCURITÉ COMPRENANT UNE CARACTÉRISTIQUE DE SÉCURITÉ

(43) Veröffentlichungstag der Anmeldung: 11.11.2015
(73) Patentinhaber: Orell Füssli Sicherheitsdruck AG, 8003 Zürich (CH)
(72) Erfinder: WALDHAUSER, Armin, CH-8045 Zürich (CH)
(74) Vertreter: Sutter, Kurt
(86) Internationale Anmeldenummer: PCT/CH2012/000269
(87) Internationale Veröffentlichungsnummer: WO 2014/089710

(56) Entgegenhaltungen:
- EP-A2- 1 325 816

## Beschreibung

### Gebiet der Erfindung

Die Erfindung betrifft ein Sicherheitselement für ein Sicherheitsdokument, ein Sicherheitsdokument mit einem solchen Sicherheitselement, ein Verfahren zur Herstellung eines solchen Sicherheitselements und ein Verfahren zur Prüfung der Echtheit eines Sicherheitsdokuments mit einem solchen Sicherheitselement gemäß Oberbegriff der unabhängigen Ansprüche. Die Erfindung ist besonders für den Einsatz bei Banknoten geeignet.

### Hintergrund

Sicherheitselemente werden typischerweise auf Sicherheitsdokumenten wie beispielsweise Banknoten, Ausweisen, Urkunden, Schecks, Kreditkarten und ähnlichem angebracht, um das Sicherheitsdokument gegen Fälschungen und/oder Verfälschungen zu sichern. Typische Sicherheitselemente sind zum Beispiel Wasserzeichen, Perforationen, Sicherheitsfäden, Hologramme und so weiter, welche nur schwer zu reproduzieren sind. In der Regel werden Sicherheitsdokumente mit einer Vielzahl von Sicherheitselementen versehen, die teilweise mit bloßem Auge, teilweise erst mittels einer externen Prüfvorrichtung detektiert werden können, z.B. durch Betrachten mit Auflicht, Durchlicht oder ultraviolettem Licht.

Die Dokumente US 5,582,103 und EP 1 325 816 A2 offenbaren Sicherheitselemente für Sicherheitsdokumente, welche durch eine spezifische Kombination von Linien-Prägerastern mit Linien-Druckrastern unter zwei unterschiedlichen Betrachtungswinkeln zwei unterschiedliche Informationen preisgeben. Bei senkrechter Betrachtung erscheint das aus dem Stand der Technik bekannte Sicherheitselement z.B. als einheitlich graue Fläche, während bei schräger Betrachtung aus einer ersten Richtung eine graue Linie auf hellen Hintergrund erscheint. Bei schräger Betrachtung aus einer zweiten Richtung erscheint die graue Linie auf dunklem Hintergrund.

Ein Nachteil der offenbarten Sicherheitselemente ist deren relativ geringer Informationsgehalt.

### Darstellung der Erfindung

Somit ist es eine Aufgabe der Erfindung, ein verbessertes Sicherheitselement der genannten Art bereitzustellen, welches einen höheren Informationsgehalt aufweist. Weitere Aufgaben sind die Bereitstellung eines Sicherheitsdokuments mit einem solchen Sicherheitselement, ein Verfahren zur Herstellung eines solchen Sicherheitselements und ein Verfahren zur Prüfung der Echtheit eines Sicherheitsdokuments mit einem solchen Sicherheitselement.

Diese Aufgaben werden durch ein Sicherheitselement, ein Sicherheitsdokument, ein Verfahren zur Herstellung eines solchen Sicherheitselements und ein Verfahren zur Prüfung der Echtheit eines solchen Sicherheitsdokuments mit einem solchen Sicherheitselement mit den Merkmalen der unabhängigen Ansprüche gelöst.

Das erfindungsgemäße Sicherheitselement umfasst dementsprechend ein Substrat, z.B. ein Folie oder ein Papier, mit einer Oberfläche. Auf dem Substrat sind mindestens ein erstes, ein zweites, ein drittes und ein viertes Muster mit einem ersten, einem zweiten, einem dritten und einem vierten Musterwinkel angeordnet. Der Begriff Musterwinkel bezieht sich auf eine Ausrichtung oder Orientierung des jeweiligen Musters parallel zur Oberfläche des Substrats. Die Musterwinkel sind unterschiedlich zueinander.

Das erste, das zweite, das dritte und das vierte Muster umfasst weiterhin jeweils eine Prägestruktur des Substrats, welche z.B. durch Blindprägung hergestellt werden kann. Die Prägestrukturen sind derart ausgebildet, dass bei einer senkrechten Betrachtung der Substratoberfläche die Muster sichtbar sind und dass bei einer schrägen Betrachtung der Substratoberfläche unter mindestens einer vorgegebenen Betrachtungsrichtung mindestens ein Teil mindestens eines der Muster durch mindestens einen Teil mindestens einer der Prägestrukturen verdeckt wird, so dass bei abwechselnd der senkrechten und der schrägen Betrachtung der Substratoberfläche ein optischer Kippeffekt auftritt.

Eine erste Sicherheitsinformation ist als eine örtliche Verteilung des ersten und des zweiten Musters ausgestaltet. Diese Verteilung bzw. die erste Sicherheitsinformation umfasst einen ersten Teilbereich und einen zweiten Teilbereich des Substrats, z.B. den ersten Teilbereich außerhalb eines Zeichens und den zweiten Teilbereich innerhalb des Zeichens. Das erste Muster bzw. das zweite Muster ist zumindest in jeweils einem Teil des ersten bzw. zweiten Teilbereichs angeordnet. Somit kann die erste Sicherheitsinformation durch die Teile des ersten und des zweiten Teilbereichs codiert werden, in welchen das erste und das zweite Muster angeordnet ist.

Eine zweite Sicherheitsinformation ist als eine örtliche Verteilung des dritten und des vierten Musters ausgestaltet. Diese Verteilung bzw. die zweite Sicherheitsinformation umfasst einen dritten und einen vierten Teilbereich des Substrats, z.B. den dritten Teilbereich außerhalb einer Ziffer und den vierten Teilbereich innerhalb der Ziffer. Das dritte Muster bzw. das vierte Muster ist zumindest in jeweils einem Teil des dritten bzw. vierten Teilbereichs angeordnet. Somit kann die zweite Sicherheitsinformation durch die Teile des dritten und des vierten Teilbereichs codiert werden, in welchen das dritte und das vierte Muster angeordnet ist.

Erfindungsgemäß überlappen sich die erste Sicherheitsinformation und die zweite Sicherheitsinformation zumindest teilweise. In anderen Worten können der erste Teilbereich und der dritte Teilbereich zumindest teilweise überlappend ausgebildet sein und/oder es können der zweite Teilbereich und der vierte Teilbereich zumindest teilweise überlappend ausgebildet sein. Somit ist eine verbesserte Sicherheit des Sicherheitselements gegeben, da durch die Überlappung der Informationsgehalt des Sicherheitselements erhöht werden kann.

In einer bevorzugten Ausführungsform umfasst mindestens eines der Muster weiterhin ein Raster, insbesondere ein Druckraster mit mindestens einer zum Substrat kontrastierenden Farbe. Somit kann der Kontrastumfang des oder der Muster erhöht werden, was zu einer leichteren Auslesbarkeit führt. Das oder die Raster können auch mehr als eine zum Substrat und zueinander kontrastierende Farben aufweisen. Somit ist eine spezifische Ausgestaltung der Raster ermöglicht, was die Sicherheit weiter erhöht. Auch ist es beispielsweise möglich, fluoreszierende oder phosphoreszierende Farben und/oder in zumindest einem Spektralbereich reflektierende Beschichtungen zu verwenden, was die Sicherheit weiter erhöht.

Vorzugsweise verlaufen mindestens eines der Raster und die demselben Muster zugeordnete Prägestruktur zumindest teilweise parallel zueinander. Damit ist eine einfachere Realisierung des optischen Kippeffekts ermöglicht.

In einer weiteren bevorzugten Ausführungsform ist mindestens eines der Raster, insbesondere alle Raster, auf einer Flanke der dem jeweiligen Raster zugeordneten Prägestruktur des Musters angeordnet. Insbesondere ist das Raster zu einem überwiegenden Teil auf der Flanke oder sogar ausschließlich auf der Flanke der dem jeweiligen Raster zugeordneten Prägestruktur des Musters angeordnet, was zu einer spezifischeren Ausgestaltung des optischen Kippeffekts und somit verbesserter Sicherheit führt. Beispielsweise sind die Muster mit den Rastern und den Prägestrukturen so ausgestaltet, dass jeweils eines der Raster bei bestimmten zu dem jeweiligen Musterwinkel in Beziehung stehenden Betrachtungsrichtungen (z.B. für einige der Betrachtungsrichtungen, deren Projektion parallel zum Musterwinkel auf der Substratoberfläche ist), optisch anders erscheint (z.B. in gleichbleibendem Grauton) als die anderen Muster (welche z.B. je nach "Betrachtungshöhenwinkel" also einem Polarwinkel der Betrachtungsrichtung von grau nach dunkelgrau oder von grau nach hellgrau wechseln). Dazu kann wie oben beschrieben beispielsweise mindestens eines der Raster (und insbesondere alle Raster) auf einer Flanke der dem jeweiligen Raster zugeordneten Prägestruktur angeordnet sein. Weitere vorteilhafte Anordnungen mindestens eines der Raster (und insbesondere aller Raster) zu einem überwiegenden Teil auf einer Flanke und/oder ausschließlich auf einer Flanke der dem jeweiligen Muster zugeordneten Prägestruktur führen zu einer Vielzahl an unterschiedlichen Gestaltungsmöglichkeiten. Für konkrete Beispiele sei auf die Figuren 12, 15, 16, 17, 19, 20, 21 und 29 und die zugehörigen Beschreibungsabschnitte aus der EP 1 325 816 A2 verwiesen, welche hierin durch Verweis aufgenommen sind. Dadurch ist erfindungsgemäß ein stark betrachtungsrichtungsabhängiges Sicherheitsmerkmal erhältlich.

Bevorzugt weist mindestens eines der Muster zumindest abschnittsweise eine Linienform auf, wodurch ein leichter auszulesender optischer Kippeffekt entsteht.

Erfindungsgemäss umfasst das Sicherheitselement weiterhin erste Rasterzellen. Das erste Muster und das zweite Muster sind in diesen ersten Rasterzellen angeordnet, und zwar ausschließlich dort. Somit ist eine Zuordnung der ersten beiden Muster zu den ersten Rasterzellen erreichbar.

Weiterhin umfasst das erfindungsgemässe Sicherheitselement zweite Rasterzellen. Das dritte Muster und das vierte Muster sind in diesen zweiten Rasterzellen angeordnet, und zwar ausschließlich dort. Somit ist eine Zuordnung des dritten und vierten Musters zu den zweiten Rasterzellen erreichbar.

Die ersten Rasterzellen und die zweiten Rasterzellen sind nicht überlappend nebeneinander auf dem Substrat angeordnet. Somit ergibt sich die Möglichkeit, die ersten und zweiten Rasterzellen nicht überlappend nebeneinander auf dem Substrat anzuordnen und somit die erste und die zweite Sicherheitsinformation durch die jeweiligen Muster (also das erste und das zweite Muster für die erste Sicherheitsinformation und das dritte und das vierte Muster für die zweite Sicherheitsinformation) auf dem Sicherheitselement anzuordnen.

Weiterhin sind die ersten und die zweiten Rasterzellen jeweils nicht alle gleichförmig ausgestaltet. Somit umfasst sowohl die Gruppe der ersten Rasterzellen als auch die Gruppe der zweiten Rasterzellen jeweils erste und zweite verschieden ausgebildete Rasterzelltypen, welche so ausgebildet sind, dass die ersten Rasterzelltypen die zweiten Rasterzelltypen umgeben, also die zweiten Rasterzelltypen in den ersten Rasterzelltypen angeordnet werden können. Somit ergibt sich eine vorteilhaftere Flächenabdeckung durch die Rasterzellen.

Erfindungsgemäss sind dabei für jedes Paar einer ersten und einer zweiten Rasterzelle (das Paar umfassend den zweiten Rasterzelltyp und den diesen zweiten Rasterzelltyp umgebenden ersten Rasterzelltyp) entweder
* das erste Muster und das zweiten Muster ausschließlich im ersten Rasterzelltyp angeordnet und das dritte Muster und das vierte Muster ausschließlich im zweiten Rasterzelltyp angeordnet, oder
* das erste Muster und das zweiten Muster ausschließlich im zweiten Rasterzelltyp angeordnet und das dritte Muster und das vierte Muster ausschließlich im ersten Rasterzelltyp angeordnet.

Vorzugsweise sind die ersten und die zweiten Rasterzellen so ausgebildet, dass eine von den ersten Rasterzellen bedeckte Gesamtfläche im Bereich von 50 bis 150%, insbesondere von 70 bis 130%, insbesondere von 98 bis 102% einer von den zweiten Rasterzellen bedeckten Gesamtfläche liegt. Somit ergibt sich eine gleichmäßigere Abdeckung der Fläche durch die beiden Rasterzelltypen.

Erfindungsgemäss sind die ersten Rasterzellen und die zweiten Rasterzellen in einer ersten Richtung parallel zum Substrat und in einer zweiten Richtung parallel zum Substrat einander abwechselnd und vorzugsweise periodisch oder nichtperiodisch wiederholend auf zumindest einem Teil des Substrats angeordnet. Somit ergibt sich die Möglichkeit, die ersten und zweiten Rasterzellen und somit die erste und die zweite Sicherheitsinformation über das ganze Substrat verteilt auf dem Substrat anzuordnen, wobei der erste/zweite bzw. der dritte/vierte Teilbereich mit dem ersten bzw. zweiten Sicherheitsmerkmal nicht zusammenhängend ausgebildet sein müssen.

In einer bevorzugten Ausführungsform umfasst das Sicherheitselement weiterhin eine dritte Sicherheitsinformation, welche als eine örtliche Variation mindestens des ersten, des zweiten, des dritten oder des vierten Musters ausgestaltet ist, insbesondere des ersten und des zweiten Musters. Eine solche örtliche Variation des Musters ist vorzugsweise durch eine Modulation eines Musterparameters ausgebildet, beispielsweise durch eine Modulation einer Linienbreite und/oder einer Prägestrukturtiefe. Somit ist beispielsweise die Wiedergabe einer Graustufeninformation (eines Graustufenbildes) als dritte Sicherheitsinformation möglich, welche zur Verschleierung der ersten und der zweiten Sicherheitsinformation dient, so dass diese auf den ersten Blick schwerer erkennbar sind.

In einer anderen bevorzugten Ausführungsform umfasst das Sicherheitselement weiterhin ein fünftes Muster und eine vierte Sicherheitsinformation. Diese vierte Sicherheitsinformation ist als Kombination des fünften Musters mit mindestens einem Muster aus der Gruppe des ersten, des zweiten, des dritten und des vierten Musters ausgestaltet. Beispielsweise kann das fünfte Muster als Überlagerung des ersten bis vierten Musters mit dem fünften Muster inkl. dessen Prägestruktur und dessen optionalem Raster ausgestaltet sein, so dass sich bei geeigneter Betrachtungsrichtung Moire-Effekt zwischen dem fünften Muster und einem der ersten vier Muster ergeben. Somit wird die Sicherheit des Sicherheitsmerkmals weiter erhöht.

In einer anderen bevorzugten Ausführungsform ist das Substrat zumindest teiltransparent ausgeführt und mindestens eines der Muster ist auf der ersten Substratoberfläche angeordnet während mindestens eines der restlichen Muster auf einer zweiten Substratoberfläche angeordnet ist, welche der ersten Oberfläche gegenüberliegt. Somit ergeben sich Transparenzeffekte, welche die Sicherheit des Sicherheitsmerkmals weiter erhöhen.

Als ein weiterer Aspekt der Erfindung ist ein Sicherheitsdokument mit einem Sicherheitsmerkmal wie oben beschrieben offenbart. Ein solches Sicherheitsdokument, z.B. eine Banknote, weist eine erhöhte Fälschungssicherheit gegenüber bekannten Sicherheitsdokumenten auf, da das Sicherheitsmerkmal eine größere Zahl an Informationen enthält.

Als ein weiterer Aspekt der Erfindung ist ein Verfahren zur Herstellung eines oben beschriebenen Sicherheitselements offenbart, welches Verfahren die folgenden Schritte umfasst:
- Aufbringen eines ersten Musters mit einem ersten Musterwinkel inkl. erster Prägestruktur auf zumindest einen Teil eines ersten Teilbereichs eines Substrats,
- Aufbringen eines zweiten Musters mit einem zweiten Musterwinkel inkl. zweiter Prägestruktur auf zumindest einen Teil eines zweiten Teilbereichs eines Substrats,
- Aufbringen eines dritten Musters mit einem dritten Musterwinkel inkl. dritter Prägestruktur auf zumindest einen Teil eines dritten Teilbereichs eines Substrats,
- Aufbringen eines vierten Musters mit einem vierten Musterwinkel inkl. vierter Prägestruktur auf zumindest einen Teil eines vierten Teilbereichs eines Substrats.

Bevorzugt umfasst das Herstellungsverfahren den weiteren Schritt
- Aufbringen eines ersten, eines zweiten, eines dritten und/oder eines vierten zu jeweils einem der Muster zugeordneten Raster, insbesondere Linienrasters, auf das Substrat.

Die o.g. Muster-/Rasteraufbringschritte umfassen z.B. Blindprägung von Foliensubstraten, Prägung und optional Schwarzweiß- oder Farbdruck von Papier- oder Kunststoffsubstraten, Überdrucken von Siebdruckelementen, OVI, OVMI, Iriodin etc.

Somit kann ein erfindungsgemäßes Sicherheitsmerkmal einfacher hergestellt werden.

Als ein weiterer Aspekt der Erfindung ist ein Verfahren zur Prüfung der Echtheit eines oben beschriebenen Sicherheitsdokuments mit einem oben beschriebenen Sicherheitselement offenbart, welches Verfahren die folgenden Schritte umfasst:
- Betrachtung des Sicherheitsdokuments aus einer ersten Betrachtungsrichtung und Vergleich einer ersten beobachteten Intensitätsverteilung mit einer ersten Vorlage (z.B. erwartete Intensitätverteilung "OFS" hell auf dunklem Untergrund),
- Betrachtung des Sicherheitsdokuments aus einer zweiten Betrachtungsrichtung und Vergleich einer zweiten beobachteten Intensitätsverteilung mit einer zweiten Vorlage (z.B. erwartete Intensitätverteilung "700" hell auf dunklem Untergrund), und
- anhand der ersten und der zweiten beobachteten Intensitätsverteilungen Klassifizierung des Sicherheitsdokuments als echt oder unecht.

Bevorzugt umfasst das Verfahren zur Prüfung der Echtheit die weiteren Schritte:
- Betrachtung des Sicherheitsdokuments aus einer dritten Betrachtungsrichtung und Vergleich einer dritten beobachteten Intensitätsverteilung mit einer dritten Vorlage (z.B. erwartete Intensitätverteilung "OFS" dunkel auf hellem Untergrund),
- Betrachtung des Sicherheitsdokuments aus einer vierten Betrachtungsrichtung und Vergleich einer vierten beobachteten Intensitätsverteilung mit einer vierten Vorlage (z.B. erwartete Intensitätverteilung "700" dunkel auf hellem Untergrund), und
- anhand der dritten und der vierten beobachteten Intensitätsverteilungen Klassifizierung des Sicherheitsdokuments als echt oder unecht.

Es sei an dieser Stelle darauf hingewiesen, dass neben dem ersten bis vierten Muster weitere Muster auf dem Sicherheitselement angeordnet werden können, um weitere betrachtungsrichtungsabhängige Sicherheitsinformationen anzuordnen. Dadurch kann der Informationsgehalt noch weiter erhöht werden.

Die beschriebenen Ausführungsformen beziehen sich gleichermaßen auf die Erzeugnisansprüche und die Verfahrensansprüche. Wie es für den Fachmann offensichtlich ist, können synergistische Effekte aus der Kombination von Merkmalen unterschiedlicher Ausführungsformen entstehen, obgleich diese nicht im Detail beschrieben sein mögen.

### Kurze Beschreibung der Zeichnungen

Weitere vorteilhafte Ausgestaltungen der Erfindung ergeben sich aus den abhängigen Ansprüchen und den anhand der Zeichnungen nachfolgend dargestellten Ausführungsbeispielen. Es zeigen:
Fig. 1 zeigt ein erfindungsgemäßes Sicherheitsdokument 100 mit einem erfindungsgemäßen Sicherheitsmerkmal 10 mit einem Substrat 9 und einer Substratoberfläche O,
Fig. 2 zeigt eine erste Sicherheitsinformation I1 mit einem ersten Teilbereich B1 und einem zweiten Teilbereich B2,
Fig. 3 zeigt die erste Sicherheitsinformation I1 aus Fig. 2, welche den ersten Teilbereich B1 mit einem ersten Muster M1, einem ersten Linienraster R1 und einer ersten Prägestruktur P1 umfasst und den zweiten Teilbereich B2 mit einem zweiten Muster M2, einem zweiten Linienraster R2 und einer zweiten Prägestruktur P2,
Fig. 4 zeigt eine zweite Sicherheitsinformation I2 mit einem dritten Teilbereich B3 und einem vierten Teilbereich B4,
Fig. 5 zeigt die zweite Sicherheitsinformation I2 aus Fig. 4, welche den dritten Teilbereich B3 mit einem dritten Muster M3, einem dritten Linienraster R3 und einer dritten Prägestruktur P3 umfasst und den vierten Teilbereich B4 mit einem vierten Muster M4, einem vierten Linienraster R4 und einer vierten Prägestruktur P4,
Fig. 6 zeigt (nicht beansprucht) abwechselnd in einer ersten und zweiten Richtung 99, 98 angeordnete quadratische Rasterzellen RZ1, RZ2 auf der Substratoberfläche 0, sowie Teile der Bereiche B1-B4 mit den Linienrastern R1, R2, R3 und R4,
Fig. 7 zeigt erfindungsgemäß nichtquadratische Rasterzellen RZ1, RZ2 in den Teilbereichen B1/B3, wobei die Rasterzellen RZ1, RZ2 jeweils erste und zweite Rasterzelltypen RZA und RZB aufweisen, wobei die ersten Rasterzelltypen RZA so ausgestaltet sind, dass sie die zweiten Rasterzelltypen RZB umgeben,
Fig. 8 zeigt die Bereiche B1, B2, B3 und B4 in Kombination mit den Rasterzellen RZ1 und RZ2 aus Fig. 7, wobei die Muster M1-M4 je nach Rasterzellen RZ1, RZ2 und Teilbereichen B1-B4 angeordnet sind,
Fig. 9 zeigt die Oberfläche O eines Substrats 9 eines Sicherheitsmerkmals 10 in senkrechter Betrachtung sowie schematisch vier verschiedene schräge Beobachtungsrichtungen A, B, C und D,
Fig. 10 zeigt die Oberfläche O des Substrats 9 des Sicherheitsmerkmals aus Fig. 9 in schräger Beobachtung aus der Betrachtungsrichtung A,
Fig. 11 zeigt die Oberfläche 0 des Substrats 9 des Sicherheitsmerkmals aus Fig. 9 in schräger Beobachtung aus der Betrachtungsrichtung B,
Fig. 12 zeigt die Oberfläche O des Substrats 9 des Sicherheitsmerkmals aus Fig. 9 in schräger Beobachtung aus der Betrachtungsrichtung C,
Fig. 13 zeigt die Oberfläche O des Substrats 9 des Sicherheitsmerkmals aus Fig. 9 in schräger Beobachtung aus der Betrachtungsrichtung D,
Fig. 14 zeigt eine dritte Sicherheitsinformation I3 mit einer örtlichen Variation eines Musterparameters eines ersten Rasters R1, und
Fig. 15 zeigt die dritte Sicherheitsinformation I3 aus Fig. 14 mit einer örtlichen Variation eines Musterparameters eines zweiten Rasters R2.

### Weg(e) zur Ausführung der Erfindung

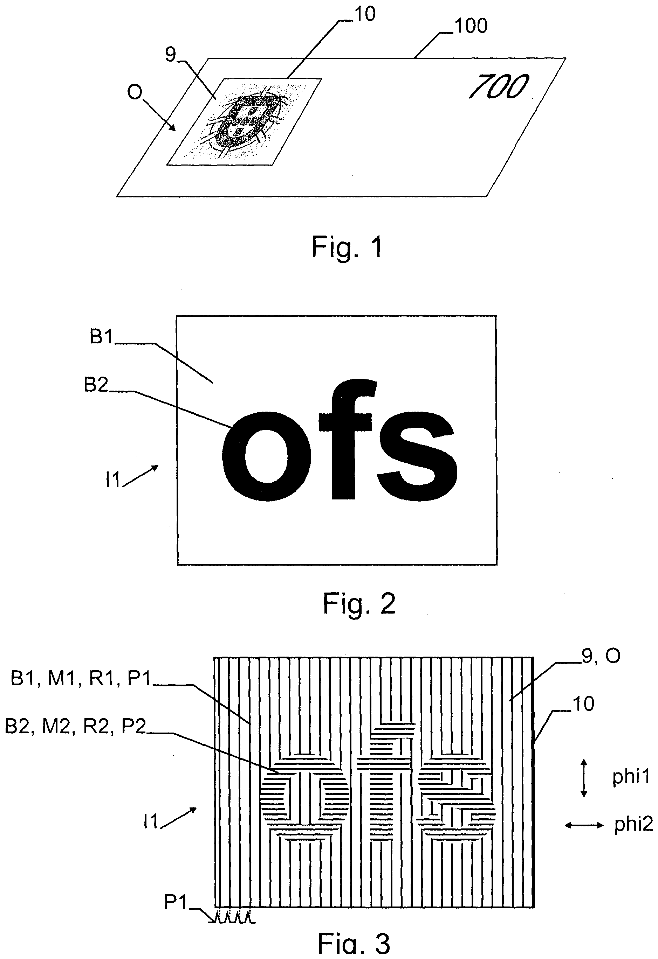

Die Fig. 1 zeigt ein erfindungsgemäßes Sicherheitsdokument 100 (hier eine Banknote) mit einem erfindungsgemäßen Sicherheitsmerkmal 10. Das Sicherheitsmerkmal 10 umfasst ein Substrat 9 mit einer Substratoberfläche 0 sowie schematisch einen aufgedruckten Wert der Banknote "700" Schweizer Franken.

Die Fig. 2 zeigt eine erste Sicherheitsinformation I1 (Schriftzug "ofs") mit einem ersten Teilbereich B1 außerhalb des Schriftzugs (weiße Fläche) und einem zweiten Teilbereich B2 innerhalb des Schriftzugs (schwarze Fläche).

Die Fig. 3 zeigt die erste Sicherheitsinformation I1 aus Fig. 2. Hier ist der erste Teilbereich B1 des Substrats 9 mit einem ersten Muster M1 versehen, welches ein gedrucktes Linienraster R1 (vertikales Raster bei normaler Betrachtung der Figur) auf der Substratoberfläche 0 und eine Prägestruktur P1 (angedeutet als Schnittbild im unteren Teil der Figur) des Substrats 9 umfasst. Die Prägestruktur P1 weist variable Prägetiefe innerhalb der Prägelinien und zwischen den Prägelinien auf (beides nicht gezeigt). Das Muster M1 weist eine Rasterweite von 35 Linien pro Zentimeter und einen Rasterwinkel phi1 = 0° (gemessen zu einer vertikalen Seite des Substrats 9 gegen den Uhrzeigersinn) auf und ist mit einer Auflösung von 8000 dpi auf das Substrat gedruckt. Auch andere Auflösungen sind möglich. Der zweite Teilbereich B2 des Substrats 9 ist mit einem zweiten Muster M2 versehen, welches ein gedrucktes Linienraster R2 (horizontales Raster bei normaler Betrachtung der Figur) auf der Substratoberfläche O und eine Prägestruktur P2 (nicht gezeigt) des Substrats 9 umfasst. Das Muster M2 weist eine Rasterweite von 50 Linien pro Zentimeter und einen Rasterwinkel phi2 = 90° (gemessen zu einer vertikalen Seite des Substrats 9 gegen den Uhrzeigersinn) auf.

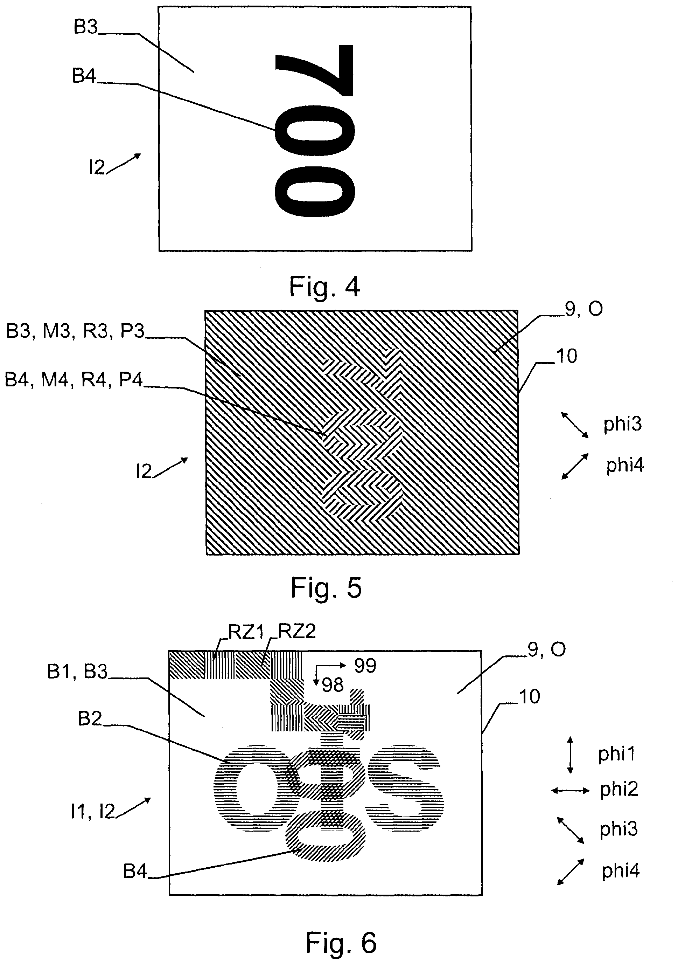

Die Fig. 4 zeigt eine zweite Sicherheitsinformation I2 (Schriftzug "700") mit einem dritten Teilbereich B3 außerhalb des Schriftzugs (weiße Fläche) und einem vierten Teilbereich B4 innerhalb des Schriftzugs (schwarze Fläche).

Die Fig. 5 zeigt die zweite Sicherheitsinformation I2 aus Fig. 4. Hier ist der dritte Teilbereich B3 des Substrats 9 mit einem dritten Muster M3 versehen, welches ein gedrucktes Linienraster R3 (schräg nach rechts unten bei normaler Betrachtung der Figur) auf der Substratoberfläche 0 und eine Prägestruktur P3 (nicht gezeigt) des Substrats 9 umfasst. Das Muster M3 weist eine Rasterweite von 50 Linien pro Zentimeter und einen Rasterwinkel phi3 = 45° (gemessen zu einer vertikalen Seite des Substrats 9 gegen den Uhrzeigersinn) auf. Der vierte Teilbereich B4 des Substrats 9 ist mit einem vierten Muster M4 versehen, welches ein gedrucktes Linienraster R4 (schräg nach links unten bei normaler Betrachtung der Figur) auf der Substratoberfläche O und eine Prägestruktur P4 (nicht gezeigt) des Substrats 9 umfasst. Das Muster M4 weist eine Rasterweite von 50 Linien pro Zentimeter und einen Rasterwinkel phi2 = 135° (gemessen zu einer vertikalen Seite des Substrats 9 gegen den Uhrzeigersinn) auf.

Die Fig. 6 zeigt abwechselnd in einer ersten und zweiten Richtung 99, 98 angeordnete quadratische Rasterzellen RZ1, RZ2 auf der Substratoberfläche 0 des Substrats 9. Die Ausführungsform der Figur 6 ist nicht beansprucht, erleichtert jedoch das Verständnis der Erfindung. Die Bereiche B1 und B3 sowie B2 und B4 aus den Figuren 2-5 überlappen sich teilweise. Zur Erklärung des erfindungsgemäßen Sicherheitsmerkmals sind acht Rasterzellen RZ1, RZ2 dargestellt. Dabei ist gezeigt, dass die Rasterzellen RZ1 und RZ2 nicht überlappend nebeneinander auf dem Substrat angeordnet sind und dass das erste und das zweite Muster M1, M2 (und die zugeordneten Linienraster R1, R2 und Prägestrukturen P1, P2) ausschließlich in den ersten Rasterzellen RZ1 angeordnet sind. Das dritte und das vierte Muster M3, M4 (und die zugeordneten Linienraster R3, R4 und Prägestrukturen P3, P4) sind ausschließlich in den zweiten Rasterzellen RZ2 angeordnet.

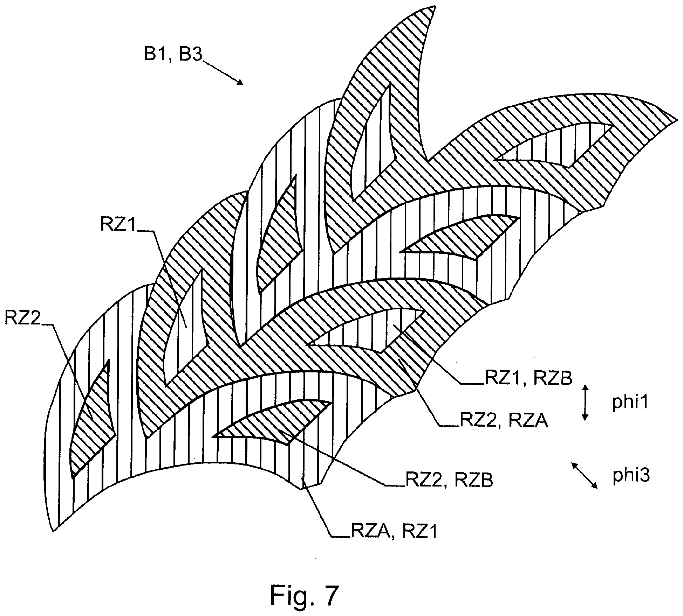

Die Fig. 7 zeigt erfindungsgemäß nichtquadratische erste und zweite Rasterzellen RZ1, RZ2 in den Teilbereichen B1/B3 (also außerhalb der Schriftzüge), wobei die Rasterzellen RZ1 und RZ2 jeweils erste und zweite Rasterzelltypen RZA und RZB aufweisen. Die ersten Rasterzelltypen RZA sind so ausgestaltet, dass sie die zweiten Rasterzelltypen RZB umgeben. Die Rasterzelltypen RZA und RZB beziehen sich hier nur auf die Form der Rasterzellen und dürfen nicht mit deren "Inhalt", also deren Zugehörigkeit zu den ersten Rasterzellen RZ1 und RZ2 verwechselt werden. Da die Rasterzellen in den Teilbereichen B1/B3 dargestellt sind, sind sie mit Mustern M1 bzw. M3 dargestellt. Die Konturlinien der Rasterzellen RZ1, RZ2 werden nicht gedruckt, sondern dienen hier nur der besseren Darstellbarkeit.

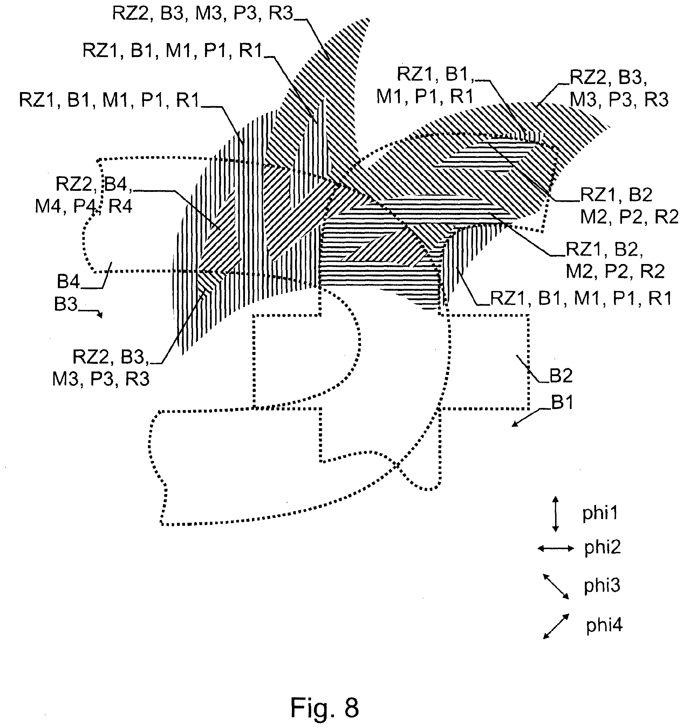

Die Fig. 8 ist als eine Kombination der erfindungsgemäßen Aufteilung der Rasterzellen aus Figur 6 mit den Rasterzellen aus Figur 7 zu verstehen und sie illustriert die Bereiche B1, B2, B3 B4 mit den Mustern M1, M2, M3, M4, den Linienrastern L1, L2, L3, L4 und den Prägestrukturen P1, P2, P3, P4. Wie oben beschrieben wird auch hier gezeigt, dass in den ersten Rasterzellen RZ1 beider Rasterzelltypen RZA und RZB im ersten Teilbereich B1 das Muster M1 angeordnet ist und im zweiten Teilbereich B2 das Muster M2. In den zweiten Rasterzellen RZ2 beider Rasterzelltypen ist im dritten Teilbereich B3 das Muster M3 angeordnet ist und im vierten Teilbereich B4 das Muster M4. Die Anordnung der Muster M1-M4 impliziert die Anordnung der jeweiligen Prägestrukturen P1-P4 und Linienrater R1-R4. Die Teilbereiche B1-B4 werden durch gepunktete Konturlinien des Buchstabens "f" von der Sicherheitsinformation I1 und der Ziffer "0" von der Sicherheitsinformation I2 verdeutlicht.

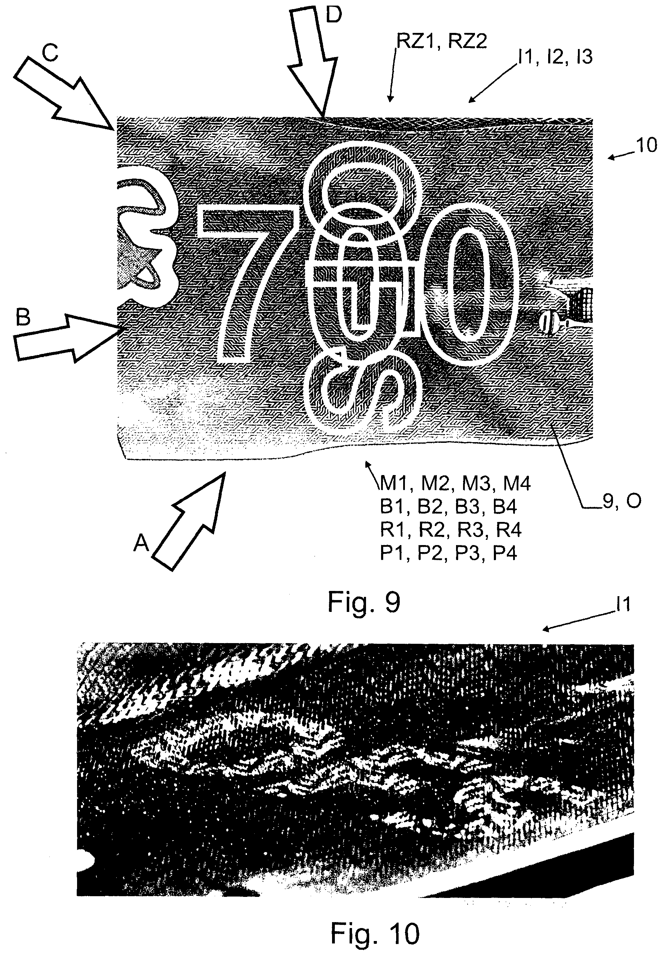

Die Fig. 9 zeigt die Oberfläche O eines Substrats 9 eines erfindungsgemäßen Sicherheitsmerkmals 10 in senkrechter Betrachtung (von oben). Hierbei ist eine dritte Sicherheitsinformation I3 (Grauwertverteilung im Hintergrundbild) erkenntlich. Außerdem sind schematisch vier verschiedene schräge Betrachtungsrichtungen A, B, C und D dargestellt. Ein Polarwinkel gemessen von der Oberfläche O der Betrachtungsrichtungen A-D beträgt beispielsweise zwischen 5 und 35 Grad, kann aber abhängig von den Prägestrukturen auch andere Werte betragen. Eine erste und zweite Sicherheitsinformation I1 und I2 ist ebenfalls schematisch dargestellt, allerdings bei senkrechter Betrachtung nicht beobachtbar. Es sei an dieser Stelle darauf hingewiesen, dass die bisher diskutierten Azimuthwinkel phi1, phi2, phi3 und phi4 der Muster M1, M2, M3, M4 nicht den Betrachtungsrichtungen A, B, C und D in dieser Ausführungsform entsprechen. Außerdem sind die weißen Umrandungen der Sicherheitsinformationen I1, I2 nur zur Klarheit dargestellt und werden natürlich nicht mitgedruckt.

Die Fig. 10 zeigt die Oberfläche O des Substrats 9 des Sicherheitsmerkmals 10 aus Fig. 9 in schräger Beobachtung aus der Betrachtungsrichtung A. Hierbei ist die erste Sicherheitsinformation "OFS" als hellerer Bereich auf dunklerem Hintergrund klar erkenntlich.

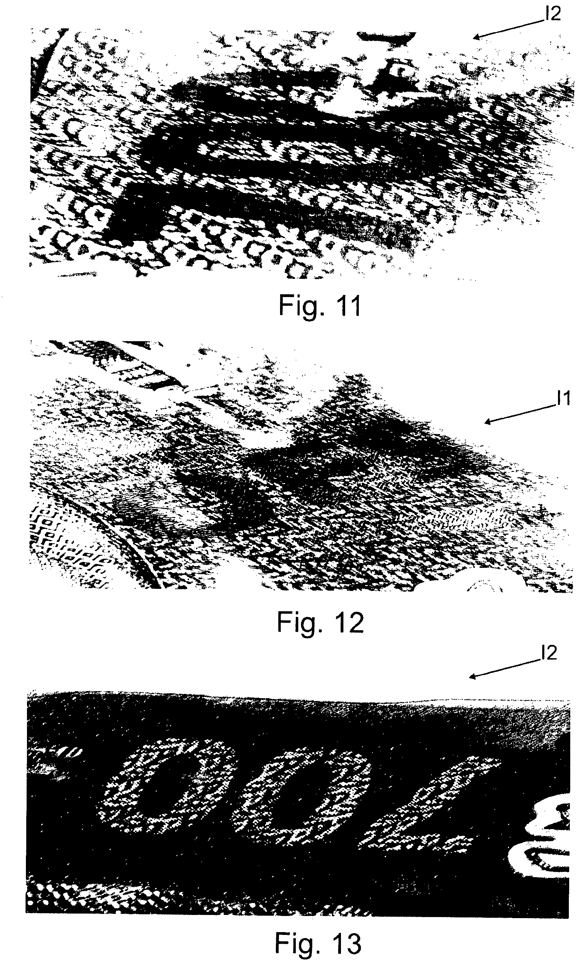

Die Fig. 11 zeigt die Oberfläche O des Substrats 9 des Sicherheitsmerkmals 10 aus Fig. 9 in schräger Beobachtung aus der Betrachtungsrichtung B. Hierbei ist die zweite Sicherheitsinformation "700" als dunklerer Bereich auf hellerem Hintergrund klar erkenntlich.

Die Fig. 12 zeigt die Oberfläche O des Substrats 9 des Sicherheitsmerkmals 10 aus Fig. 9 in schräger Beobachtung aus der Betrachtungsrichtung C. Hierbei ist wieder die erste Sicherheitsinformation "OFS" als dunklerer Bereich auf hellerem Hintergrund klar erkenntlich.

Die Fig. 13 zeigt die Oberfläche O des Substrats 9 des Sicherheitsmerkmals 10 aus Fig. 9 in schräger Beobachtung aus der Betrachtungsrichtung D. Hierbei ist wieder die zweite Sicherheitsinformation "700" als hellerer Bereich auf dunklerem Hintergrund klar erkenntlich.

Die Farbwechsel der Sicherheitsinformationen werden durch die Anordnung der Linienraster auf Flanken der Prägestrukturen erreicht.

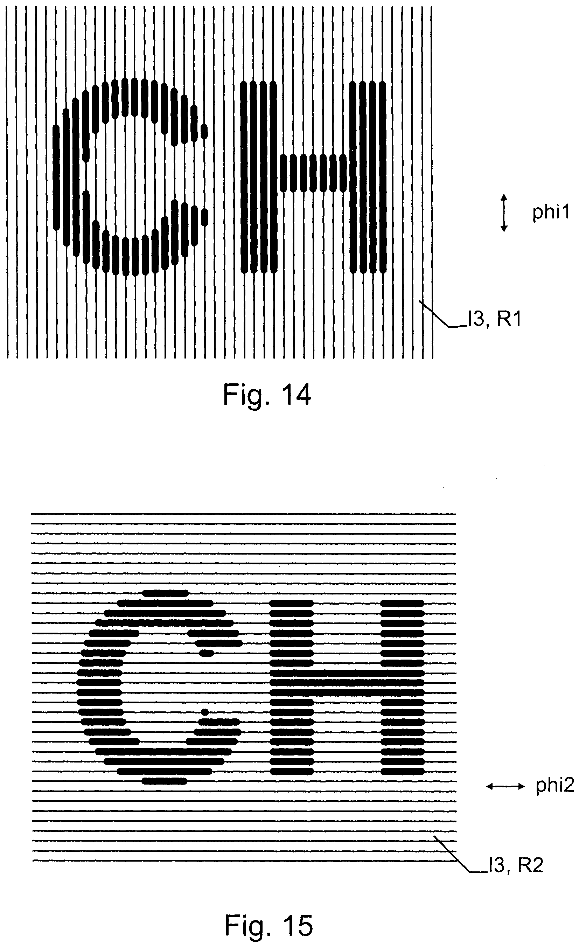

Die Fig. 14 zeigt eine dritte Sicherheitsinformation I3 (Schriftzug "CH") mit einer örtlichen Variation eines Musterparameters. Hier ist eine Liniendicke eines vertikalen Linienrasters R1 innerhalb des Schriftzugs erhöht.

Die Fig. 15 zeigt die dritte Sicherheitsinformation I3 aus der Fig. 14 mit einer örtlichen Variation eines Musterparameters. Hier ist eine Liniendicke eines horizontalen Linienrasters R2 innerhalb des Schriftzugs erhöht.

Somit kann die dritte Sicherheitsinformation unabhängig von der ersten und zweiten Sicherheitsinformation angeordnet werden und dient zur Verschleierung der ersten beiden Sicherheitsinformationen

Es sei an dieser Stelle nochmals darauf hingewiesen, dass etwaig gezeigte Umrisse der Rasterzellenbereich nur aus Klarheitsgründen dargestellt sind und im Sicherheitsmerkmal nicht gedruckt werden.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Sicherheitselement (10) für ein Sicherheitsdokument (100), wobei das Sicherheitselement (10) umfasst
- ein Substrat (9) mit einer Oberfläche (0),
- mindestens ein erstes, zweites, drittes und viertes Muster (M1, M2, M3, M4) mit einem ersten, zweiten, dritten und vierten Musterwinkel (phi1, phi2, phi3, phi4), jedes Muster (M1, M2, M3, M4) umfassend eine Prägestruktur (P1, P2, P3, P4) des Substrats (9), wobei die Prägestrukturen (P1, P2, P3, P4) derart ausgebildet sind, dass bei einer senkrechten Betrachtung der Substratoberfläche (O) die Muster (M1, M2, M3, M4) sichtbar sind und dass bei einer schrägen Betrachtung der Substratoberfläche (O) unter mindestens einer vorgegebenen Betrachtungsrichtung mindestens ein Teil mindestens eines der Muster (M1, M2, M3, M4) durch mindestens einen Teil mindestens einer der Prägestrukturen (P1, P2, P3, P4) verdeckt wird, so dass bei abwechselnd der senkrechten und der schrägen Betrachtung der Substratoberfläche (O) ein optischer Kippeffekt auftritt,
- eine erste Sicherheitsinformation (I1) ausgestaltet als eine örtliche Verteilung des ersten und des zweiten Musters (M1, M2), welche einen ersten Teilbereich (B1) und einen zweiten Teilbereich (B2) des Substrats (9) umfasst, wobei das erste Muster (M1) zumindest in einem Teil des ersten Teilbereichs (B1) angeordnet ist und wobei das zweite Muster (M2) zumindest in einem Teil des zweiten Teilbereichs (B2) angeordnet ist, und
- eine zweite Sicherheitsinformation (I2) ausgestaltet als eine örtliche Verteilung des dritten und des vierten Musters (M3, M4), welche einen dritten Teilbereich (B3) und einen vierten Teilbereich (B4) des Substrats (9) umfasst, wobei das dritte Muster (M3) zumindest in einem Teil des dritten Teilbereichs (B3) angeordnet ist und wobei das vierte Muster (M4) zumindest in einem Teil des vierten Teilbereichs (B4) angeordnet ist, wobei die erste Sicherheitsinformation (I1) und die zweite Sicherheitsinformation (I2) zumindest teilweise überlappend angeordnet sind,
wobei das Sicherheitselement (10) weiterhin umfasst
- erste Rasterzellen (RZ1), wobei das erste Muster (M1) sowie das zweite Muster (M2) ausschließlich in den ersten Rasterzellen (RZ1) angeordnet sind, und
- zweite Rasterzellen (RZ2), wobei das dritte Muster (M3) sowie das vierte Muster (M4) ausschließlich in den zweiten Rasterzellen (RZ2) angeordnet sind,
wobei die ersten Rasterzellen (RZ1) und die zweiten Rasterzellen (RZ2) nicht überlappend nebeneinander auf dem Substrat (9) angeordnet sind,
wobei die ersten Rasterzellen (RZ1) und die zweiten Rasterzellen (RZ2) in einer ersten und in einer zweiten Richtung (99, 98) parallel zum Substrat (9) zumindest auf einem Teil des Substrats (9) einander abwechselnd auf dem Substrat (9) angeordnet sind,
wobei mindestens die ersten Rasterzellen (RZ1) und die zweiten Rasterzellen (RZ2) jeweils erste Rasterzelltypen (RZA) und zweite Rasterzelltypen (RZB) aufweisen,
wobei die ersten Rasterzelltypen (RZA) so ausgestaltet sind, dass sie die zweiten Rasterzelltypen (RZB) umgeben, und
wobei für jedes Paar einer ersten und einer zweiten Rasterzelle (RZ1, RZ2), das Paar umfassend den zweiten Rasterzelltyp (RZB) und den diesen zweiten Rasterzelltyp umgebenden ersten Rasterzelltyp (RZA) entweder
* das erste Muster (M1) und das zweite Muster (M2) ausschließlich im ersten Rasterzelltyp (RZA) angeordnet sind und das dritte Muster (M3) und das vierte Muster (M4) ausschließlich im zweiten Rasterzelltyp (RZB) angeordnet sind, oder
* das erste Muster (M1) und das zweiten Muster (M2) ausschließlich im zweiten Rasterzelltyp (RZB) angeordnet sind und das dritte Muster (M3) und das vierte Muster (M4) ausschließlich im ersten Rasterzelltyp (RZA) angeordnet sind.

2. Sicherheitselement (10) gemäß Anspruch 1, wobei der erste Teilbereich (B1) und der dritte Teilbereich (B3) zumindest teilweise überlappend ausgebildet sind und/oder wobei der zweite Teilbereich (B2) und der vierte Teilbereich (B4) zumindest teilweise überlappend ausgebildet sind.

3. Sicherheitselement (10) gemäß einem der vorangehenden Ansprüche, wobei mindestens eines der Muster (M1, M2, M3, M4) weiterhin ein Raster (R1, R2, R3, R4), insbesondere ein Druckraster (R1, R2, R3, R4), umfasst mit mindestens einer zum Substrat (9) kontrastierenden Farbe.

4. Sicherheitselement (10) gemäß Anspruch 3, wobei mindestens eines der Raster (R1, R2, R3, R4) mindestens zwei zum Substrat (9) und zueinander kontrastierende Farben aufweist.

5. Sicherheitselement (10) gemäß einem der Ansprüche 3 oder 4, wobei mindestens eines der Raster (R1, R2, R3, R4), insbesondere alle Raster (R1, R2, R3, R4), auf einer Flanke, insbesondere zu einem überwiegenden Teil auf einer Flanke, insbesondere ausschließlich auf einer Flanke, der dem jeweiligen Raster (R1, R2, R3, R4) zugeordneten Prägestruktur (P1, P2, P3, P4) angeordnet ist.

6. Sicherheitselement (10) gemäß einem der vorangehenden Ansprüche, wobei mindestens eines der Muster (M1, M2, M3, M4) so ausgebildet ist, dass es zumindest abschnittsweise eine Linienform aufweist.

7. Sicherheitsmerkmal (10) gemäß einem der vorangehenden Ansprüche, wobei die ersten Rasterzellen (RZ1) und die zweiten Rasterzellen (RZ2) in einer ersten und in einer zweiten Richtung (99, 98) parallel zum Substrat (9) zumindest auf einem Teil des Substrats (9) periodisch wiederholend auf dem Substrat (9) angeordnet sind.

8. Sicherheitselement (10) gemäß einem der vorangehenden Ansprüche, wobei die ersten und die zweiten Rasterzellen (RZ1, RZ2) so ausgebildet sind, dass eine von den ersten Rasterzellen (RZ1) bedeckte Gesamtfläche im Bereich von 50 bis 150%, insbesondere 70 bis 130%, insbesondere 98 bis 102% einer von den zweiten Rasterzellen (RZ2) bedeckten Gesamtfläche liegt.

9. Sicherheitselement (10) gemäß einem der vorangehenden Ansprüche, wobei eine Musterweite des ersten, zweiten, dritten und/oder des vierten Musters (M1, M2, M3, M4) zwischen 30 und 60 Linien pro Zentimeter beträgt, insbesondere zwischen 40 und 60 Linien pro Zentimeter, insbesondere zwischen 48 und 52 Linien pro Zentimeter.

10. Sicherheitselement (10) gemäß einem der vorangehenden Ansprüche, wobei eine Winkeldifferenz zwischen dem ersten und dem zweiten Musterwinkel (phi1, phi2), zwischen dem zweiten und dem dritten Musterwinkel (phi2, phi3) und zwischen dem dritten und dem vierten Musterwinkel (phi3, phi4) mindestens 15° beträgt.

11. Sicherheitselement (10) gemäß Anspruch 10, wobei eine Winkeldifferenz zwischen dem ersten und dem zweiten Musterwinkel (phi1, phi2) und zwischen dem dritten und dem vierten Musterwinkel (phi3, phi4) 90° beträgt und wobei eine Winkeldifferenz zwischen dem zweiten und dem dritten Musterwinkel (phi2, phi3) 45° beträgt.

12. Sicherheitselement (10) gemäß einem der vorangehenden Ansprüche weiterhin umfassend eine dritte Sicherheitsinformation (I3), wobei die dritte Sicherheitsinformation (I3) als eine örtliche Variation mindestens des ersten, des zweiten, des dritten oder des vierten Musters (M1, M2, M3, M4) ausgestaltet ist, insbesondere des ersten und des zweiten Musters (M1, M2).

13. Sicherheitselement (10) gemäß Anspruch 12, wobei die Variation des Musters (M1, M2, M3, M4) als eine Modulation eines Musterparameters ausgebildet ist, insbesondere als eine Modulation einer Linienbreite und/oder einer Prägestrukturtiefe.

14. Sicherheitselement (10) gemäß einem der vorangehenden Ansprüche weiterhin umfassend ein fünftes Muster (M5) und eine vierte Sicherheitsinformation (I4), welche als Kombination des fünften Musters (M5) mit mindestens einem Muster (M1, M2, M3, M4) aus der Gruppe des ersten, des zweiten, des dritten und des vierten Musters (M1, M2, M3, M4) ausgestaltet ist.

15. Sicherheitsdokument (10) mit einem Sicherheitselement (1) gemäß einem der vorangehenden Ansprüche.

16. Verfahren zur Herstellung eines Sicherheitselements (1) gemäß einem der Ansprüche 1 bis 14 umfassend die folgenden Schritte:
- Aufbringen eines ersten Musters (M1) mit einem ersten Musterwinkel (phi1) und einer ersten Prägestruktur (P1) auf zumindest einen Teil eines ersten Teilbereichs (B1) eines Substrats (9),
- Aufbringen eines zweiten Musters (M2) mit einem zweiten Musterwinkel (phi2) und einer zweiten Prägestruktur (P2) auf zumindest einen Teil eines zweiten Teilbereichs (B2) eines Substrats (9),
- Aufbringen eines dritten Musters (M3) mit einem dritten Musterwinkel (phi3) und einer dritten Prägestruktur (P3) auf zumindest einen Teil eines dritten Teilbereichs (B3) eines Substrats (9),
- Aufbringen eines vierten Musters (M4) mit einem vierten Musterwinkel (phi4) und einer vierten Prägestruktur (P4) auf zumindest einen Teil eines vierten Teilbereichs (B4) eines Substrats (9).

17. Verfahren gemäß Anspruch 16 weiterhin umfassend den folgenden Schritt:
- Aufbringen eines ersten, eines zweiten, eines dritten und/oder eines vierten zu jeweils einem der Muster (M1, M2, M3, M4) zugeordneten Raster (R1, R2, R3, R4) auf das Substrat (9).

18. Verfahren zur Prüfung der Echtheit eines Sicherheitsdokuments (10) gemäß Anspruch 15 mit einem Sicherheitselement (1) gemäß einem der Ansprüche 1 bis 14 umfassend die folgenden Schritte:
- Betrachtung des Sicherheitsdokuments (10) aus einer ersten Betrachtungsrichtung (A) und Vergleich einer ersten beobachteten Intensitätsverteilung mit einer ersten Vorlage,
- Betrachtung des Sicherheitsdokuments (10) aus einer zweiten Betrachtungsrichtung (B) und Vergleich einer zweiten beobachteten Intensitätsverteilung mit einer zweiten Vorlage,
- anhand der ersten und der zweiten beobachteten Intensitätsverteilungen Klassifizierung des Sicherheitsdokuments (10) als echt oder unecht.

## Claims

1. Security element (10) for a security document (100), wherein the security element (10) comprises
- a substrate (9) with a surface (0),
- at least a first, second, third and fourth pattern (M1, M2, M3, M4) with a first, second, third and fourth pattern angle (phi1, phi2, phi3, phi4), each pattern (M1, M2, M3, M4) comprising an embossed structure (P1, P2, P3, P4) of the substrate (9), wherein the embossed structures (P1, P2, P3, P4) are designed such that when the substrate surface (O) is viewed straight on, the patterns (M1, M2, M3, M4) are visible and when the substrate surface (O) is viewed at an oblique angle from at least one predetermined viewing direction, at least a part of at least one of the patterns (M1, M2, M3, M4) is occluded by at least a part of at least one of the embossed structures (P1, P2, P3, P4) such that a visual latent image effect occurs during the alternate viewing of the substrate surface (0) between straight on and oblique,
- a first security information item (I1) configured as a first localized distribution of the first and second patterns (M1, M2), comprising a first area (B1) and a second area (B2) of the substrate (9), wherein the first pattern (M1) is disposed in at least a part of the first area (B1) and wherein the second pattern (M2) is disposed in at least a part of the second area (B2), and
- a second security information item (I2) configured as a second localized distribution of the third and fourth patterns (M3, M4), comprising a third area (B3) and a fourth area (B4) of the substrate (9), wherein the third pattern (M3) is disposed in at least a part of the third area (B3) and wherein the fourth pattern (M4) is disposed in at least a part of the fourth area (B4),
wherein the first security information item (I1) and the second security information item (I2) are arranged at least partially overlapping,
wherein the security element (10) further comprises:
- first grid cells (RZ1), wherein the first pattern (M1) and the second pattern (M2) are exclusively arranged in the first grid cells (RZ1),
- second grid cells (RZ2), wherein the third pattern (M3) and the fourth pattern (M4) are exclusively arranged in the second grid cells (RZ2),
wherein the first grid cells (RZ1) and the second grid cells (RZ2) are arranged next to one another in a non-overlapping fashion on the substrate (9),
wherein the first grid cells (RZ1) and the second grid cells (RZ2) are arranged in a first and in a second direction (99,98) parallel to the substrate (9) on at least a part of the substrate (9) in a mutually alternating fashion,
wherein at least the first grid cells (RZ1) and the second grid cells (RZ2) each comprise first grid cell types (RZA) and second grid cell types (RZB), and
wherein the first grid cell types (RZA) are designed such that they surround the second grid cell types (RZB), and
wherein for each pair of a first and a second grid cell (RZ1, RZ2), the pair comprising the second grid cell type (RZB) and the first grid cell type (RZA) surrounding the second grid cell type (RZB), either
* the first pattern (M1) and the second pattern (M2) are arranged exclusively in the first grid cell type (RZA) and the third pattern (M3) and the fourth pattern (M4) are arranged exclusively in the second grid cell type (RZB), or
* the first pattern (M1) and the second pattern (M2) are arranged exclusively in the second grid cell type (RZB) and the third pattern (M3) and the fourth pattern (M4) are arranged exclusively in the first grid cell type (RZA).

2. Security element (10) according to claim 1, wherein the first area (B1) and the third area (B3) are designed to be at least partially overlapping and/or wherein the second area (B2) and the fourth area (B4) are designed to be at least partially overlapping.

3. Security element (10) according to one of the preceding claims, wherein at least one of the patterns (M1, M2, M3, M4) further comprises a grid (R1, R2, R3, R4), in particular a printed grid (R1, R2, R3, R4), with at least one dye that contrasts with the substrate (9).

4. Security element (10) according to claim 3, wherein at least one of the grids (R1, R2, R3, R4) comprises at least two dyes which contrast with the substrate (9) and with one another.

5. Security element (10) according to one of the claims 3 or 4, wherein at least one of the grids (R1, R2, R3, R4), in particular all grids (R1, R2, R3, R4), is disposed on one side, in particular predominantly on one side, in particular exclusively on one side of the embossed structure (P1, P2, P3, P4) associated with the respective grid (R1, R2, R3, R4).

6. Security element (10) according to one of the preceding claims, wherein at least one of the patterns (M1, M2, M3, M4) is designed such that it has a linear shape at least in areas.

7. Security element (10) according to one of the preceding claims, wherein the first grid cells (RZ1) and the second grid cells (RZ2) are arranged at least on a part of the substrate (9) in a periodically-repeating fashion on the substrate (9) in a first and a second direction (99, 98) parallel to the substrate (9).

8. Security element according to one of the preceding claims, wherein the first and the second grid cells (RZ1, RZ2) are designed such that a total area covered by the first grid cells (RZ1) is from 50 to 150%, in particular from 70% to 130%, in particular from 98% to 102% of a total area covered by the second grid cells (RZ2).

9. Security element (10) according to one of the preceding claims, wherein a pattern width of the first, second, third and/or the fourth pattern (M1, M2, M3, M4) is between 30 and 60 lines per centimeter, in particular between 40 and 60 lines per centimeter, in particular between 48 and 52 lines per centimeter.

10. Security element (10) according to one of the preceding claims, wherein an angle difference between the first and the second pattern angle (phi1, phi2), between the second and the third pattern angle (phi2, phi3) and between the third and the fourth pattern angle (phi3, phi4) is at least 15°.

11. Security element (10) according to claim 10, wherein an angle difference between the first and the second pattern angle (phi1, phi2) and between the third and the fourth pattern angle (phi3, phi4) is 90° and wherein an angle difference between the second and the third pattern angle (phi2, phi3) is 45°.

12. Security element (10) according to one of the preceding claims, further comprising a third security information item (I3), wherein the third security information item (13) is designed as a localized variation of at least the first, the second, the third or the fourth pattern (M1, M2, M3, M4), in particular of the first and the second pattern (M1, M2).

13. Security element (10) according to claim 12, wherein the variation of the pattern (M1, M2, M3, M4) is designed as a modulation of a pattern parameter, in particular a modulation of a line width and/or an embossed structure depth.

14. Security element (10) according to one of the preceding claims further comprising a fifth pattern (M5) and a fourth security information item (14) which is configured as a combination of the fifth pattern (M5) with at least one pattern (M1, M2, M3, M4) from the group of the first, the second, the third, and the fourth pattern (M1, M2, M3, M4).

15. Security document (10) comprising a security element (1) according to one of the preceding claims.

16. Method for producing a security element (1) according to one of claims 1 to 14, comprising the following steps:
- applying a first pattern (M1) with a first pattern angle (phi1) and a first embossed structure (P1) onto at least a part of a first area (B1) of a substrate (9),
- applying a second pattern (M2) with a second pattern angle (phi2) and a second embossed structure (P2) onto at least a part of a second area (B2) of a substrate (9),
- applying a third pattern (M3) with a third pattern angle (phi3) and a third embossed structure (P3) onto at least a part of a third area (B3) of a substrate (9),
- applying a fourth pattern (M4) with a fourth pattern angle (phi4) and a fourth embossed structure (P4) onto at least a part of a fourth area (B4) of a substrate (9).

17. Method according to claim 16 further comprising the following step:
- applying a first, a second, a third, and/or a fourth grid (R1, R2, R3, R4), each of which associated with one of the patterns (M1, M2, M3, M4), onto the substrate (9).

18. Method for examination of the authenticity of a security document (10) according to claim 15 with a security element (1) according to one of the claims 1 to 14, comprising the following steps:
- viewing the security document (10) from a first viewing direction (A) and comparing a first viewed intensity distribution with a first template,
- viewing the security document (10) from a second viewing direction (B) and comparing a second viewed intensity distribution with a second template,
- using the first and the second viewed intensity distributions for classifying the security document (10) as authentic or inauthentic.

## Revendications

1. Elément de sécurité (10) pour un document de sécurité (100), dans lequel l'élément de sécurité (10) comprend
- un substrat (9) avec une surface (O),
- au moins un premier, un deuxième, un troisième et un quatrième motif (M1, M2, M3, M4) ayant un premier, un deuxième, un troisième et un quatrième angle de motif (phi1, phi2, phi3, phi4), chaque motif (M1, M2, M3 , M4) comprenant une structure gaufrée (P1, P2, P3, P4) du substrat (9), les structures gaufrées (P1, P2, P3, P4) étant conçues de sorte que pour une observation à la perpendiculaire de la surface (O) du substrat les motifs (M1, M2, M3, M4) sont visibles et lorsque la surface (0) du substrat est vue sous un angle oblique par rapport à au moins une direction d'observation prédéterminée, au moins une partie d'au moins l'un des motifs (M1, M2, M3, M4) est occluse par au moins une partie d'au moins l'une des structures gaufrées (P1, P2, P3, P4) de telle sorte qu'un effet optique d'image latente survient lors de la visualisation alternée de la surface (O) du substrat entre une observation à la perpendiculaire et une observation oblique,
- un premier élément d'information de sécurité (I1) configuré comme une première distribution localisée des premier et second motifs (M1, M2), comprenant une première région (B1) et une seconde région (B2) du substrat (9), dans lequel le premier motif (M1) est disposé dans au moins une partie de la première région (B1) et dans lequel lé second motif (M2) est disposé dans au moins une partie de la seconde région (B2), et
- un deuxième élément d'information de sécurité (I2) configuré comme une deuxième distribution localisée des troisième et quatrième motifs (M3, M4), comprenant une troisième région (B3) et une quatrième région (B4) du substrat (9), dans lequel le troisième motif (M3) est disposé dans au moins une partie de la troisième région (B3) et dans lequel le quatrième motif (M4) est disposé dans au moins une partie de la quatrième région (B4),
dans lequel le premier élément d'information de sécurité (I1) et le second élément d'information de sécurité (12) sont disposés au moins partiellement en chevauchement,
dans lequel l'élément de sécurité (10) comprend en outre:
- des premières cellules de grille (RZ1), le premier motif (M1) et le second motif (M2) étant exclusivement disposés dans les premières cellules de grille (RZ1),
- des deuxièmes cellules de grille (RZ2), le troisième motif (M3) et le quatrième motif (M4) étant exclusivement disposés dans les deuxièmes cellules de grille (RZ2),
dans lequel les premières cellules de grille (RZ1) et les deuxièmes cellules de grille (RZ2) sont disposées l'une à côté de l'autre sans chevauchement sur le substrat (9),
dans lequel les premières cellules de grille (RZ1) et les deuxièmes cellules de grille (RZ2) sont disposées selon une première et selon une seconde directions (99, 98) parallèles au substrat (9) sur au moins une partie du substrat (9) de façon mutuellement alternée,
dans lequel au moins les premières cellules de grille (RZ1) et les deuxièmes cellules de grille (RZ2) comprennent chacune des premiers types de cellules de grille (RZA) et des deuxièmes types de cellules de grille (RZB), et
dans lequel les premiers types de cellules de grille (RZA) sont conçus de telle sorte qu'ils entourent les deuxièmes types de cellules de grille (RZB), et
dans lequel, pour chaque paire d'une première et d'une deuxième cellules de grille (RZ1, RZ2), la paire comprenant le deuxième type de cellule de grille (RZB) et le premier type de grille (RZA) entourant le second type de grille (RZB), soit
* le premier motif (M1) et le second motif (M2) sont disposés exclusivement dans le premier type de cellules de grille (RZA) et le troisième motif (M3) et le quatrième motif (M4) sont disposés exclusivement dans le second type de cellules de grille RZB), ou
* le premier motif (M1) et le second motif (M2) sont disposés exclusivement dans le second type de cellules de grille (RZB) et le troisième motif (M3) et le quatrième motif (M4) sont agencés exclusivement dans le premier type de cellules de grille (RZA).

2. Elément de sécurité (10) selon la revendication 1, dans lequel la première région (B1) et la troisième région (B3) sont conçues pour se chevaucher au moins partiellement et / ou dans lequel la deuxième région (B2) et la quatrième région (B4) sont conçus pour se chevaucher au moins partiellement.

3. Elément de sécurité (10) selon l'une des revendications précédentes, dans lequel au moins l'un des motifs (M1, M2, M3, M4) comprend en outre une grille (R1, R2, R3, R4), en particulier une grille imprimée (R1, R2, R3, R4), avec au moins un colorant qui contraste avec le substrat (9).

4. Elément de sécurité (10) selon la revendication 3, dans lequel au moins l'une des grilles (R1, R2, R3, R4) comprend au moins deux colorants qui contrastent avec le substrat (9) et l'un avec l'autre.

5. Elément de sécurité (10) selon l'une des revendications 3 ou 4, dans lequel au moins l'une des grilles (R1, R2, R3, R4), de préférence chacune des grilles (R1, R2, R3, R4), est disposée sur un côté, en particulier principalement sur un côté, en particulier exclusivement sur un côté de la structure gaufrée (P1, P2, P3, P4) associée à la grille respective (R1, R2, R3, R4).

6. Elément de sécurité (10) selon l'une des revendications précédentes, dans lequel au moins l'un des motifs (M1, M2, M3, M4) est conçu de telle sorte qu'il a une forme linéaire au moins dans des régions.

7. Elément de sécurité (10) selon l'une des revendications précédentes, dans lequel les premières cellules de grille (RZ1) et les deuxièmes cellules de grille (RZ2) sont disposées au moins sur une partie du substrat (9) de façon périodiquement répétée sur le substrat (9) selon une première et une deuxième directions (99, 98) parallèles au substrat (9).

8. Elément de sécurité selon l'une des revendications précédentes, dans lequel la première et la deuxième cellules de grille (RZ1, RZ2) sont conçues de sorte qu'une surface totale couverte par les premières cellules de grille (RZ1) est de 50 à 150%, en particulier de 70 % À 130%, en particulier de 98% à 102% d'une surface totale couverte par les deuxièmes cellules de grille (RZ2).

9. Elément de sécurité (10) selon l'une des revendications précédentes, dans lequel une largeur de motif des premier, deuxième, troisième et / ou quatrième motifs (M1, M2, M3, M4) est comprise entre 30 et 60 lignes par centimètre, en particulier entre 40 et 60 lignes par centimètre, en particulier entre 48 et 52 lignes par centimètre.

10. Elément de sécurité (10) selon l'une des revendications précédentes, dans lequel une différence d'angle entre les premier et second angles de motif (phi1, phi2), entre les deuxième et troisième angles de motif (phi2, phi3) et entre les troisième et quatrième angles de motif (phi3, phi4) est d'au moins 15°.

11. Elément de sécurité (10) selon la revendication 10, dans lequel une différence d'angle entre le premier et le second angles de motif (phi1, phi2) et entre le troisième et le quatrième angles de motif (phi3, phi4) est de 90° et une différence d'angle entre Le deuxième et le troisième angles de motif (phi2, phi3) est de 45°.

12. Elément de sécurité (10) selon l'une des revendications précédentes, comprenant en outre un troisième élément d'information de sécurité (13), dans lequel le troisième élément d'information de sécurité (I3) est conçu sous la forme d'une variation localisée d'au moins la première, la deuxième, la troisième ou le quatrième motif (M1, M2, M3, M4), en particulier du premier et du second motifs (M1, M2).

13. Elément de sécurité (10) selon la revendication 12, dans lequel la variation du motif (M1, M2, M3, M4) est conçue comme une modulation d'un paramètre de motif, en particulier une modulation d'une largeur de ligne et / ou d'une profondeur de structure gaufrée.

14. Elément de sécurité (10) selon l'une des revendications précédentes, comprenant en outre un cinquième motif (M5) et un quatrième élément d'information de sécurité (I4), lequel est configuré comme une combinaison du cinquième motif (M5) avec au moins un motif (M1, M2, M3, M4) du groupe du premier, du deuxième, du troisième et du quatrième motif (M1, M2, M3, M4).

15. Document de sécurité (10) comprenant un élément de sécurité (1) selon l'une des revendications précédentes.

16. Procédé de fabrication d'un élément de sécurité (1) selon l'une des revendications 1 à 14, comprenant les étapes suivantes:
- appliquer un premier motif (M1) avec un premier angle de motif (phi1) et une première structure gaufrée (P1) sur au moins une partie d'une première région (B1) d'un substrat (9),
- appliquer un deuxième motif (M2) avec un second angle de motif (phi2) et une seconde structure gaufrée (P2) sur au moins une partie d'une seconde région (B2) d'un substrat (9),
- appliquer un troisième motif (M3) avec un troisième angle de motif (phi3) et une troisième structure gaufrée (P3) sur au moins une partie d'une troisième région (B3) d'un substrat (9),
- appliquer un quatrième motif (M4) avec un quatrième angle de motif (phi4) et une quatrième structure gaufrée (P4) sur au moins une partie d'une quatrième région (B4) d'un substrat (9).

17. Procédé selon la revendication 16, comprenant en outre l'étape suivante:
- appliquer sur le substrat (9) une première, une deuxième, une troisième et / ou une quatrième grille (R1, R2, R3, R4) associées chacune à l'un des motifs (M1, M2, M3, M4).

18. Procédé d'examen de l'authenticité d'un document de sécurité (10) selon la revendication 15 avec un élément de sécurité (1) selon l'une des revendications 1 à 14, comprenant les étapes suivantes:
- visualiser le document de sécurité (10) à partir d'une première direction de visualisation (A) et comparer une première distribution d'intensité visualisée avec un premier modèle,
- visualiser le document de sécurité (10) à partir d'une seconde direction de visualisation (B) et comparer une deuxième distribution d'intensité visualisée avec un second modèle,
- utiliser les première et deuxième distributions d'intensité visualisées pour classer le document de sécurité (10) comme authentique ou non authentique.
